# EUROPÄISCHE PATENTSCHRIFT

(11) **EP 1 662 120 B1**
(45) Veröffentlichungstag und Bekanntmachung des Hinweises auf die Patenterteilung: **08.01.2014**
(21) Anmeldenummer: 05110950.2
(22) Anmeldetag: 18.11.2005
(51) Int. Cl.: F02D 11/10, F02D 9/10, F02B 37/18

(54) **Steller für ein Stellorgan**
Actuator for an actuating device
Dispositif de commande d'un actionneur

(30) Priorität: 25.11.2004 DE 102004056897
(43) Veröffentlichungstag der Anmeldung: 31.05.2006
(73) Patentinhaber: ROBERT BOSCH GMBH, 70442 Stuttgart (DE)
(72) Erfinder: Baeuerle, Michael, 71254 Ditzingen-Heimerdingen (DE); Vlad, Crina, 70184 Stuttgart (DE)

(56) Entgegenhaltungen:
- EP-A2- 0 810 359
- DE-A1- 10 112 033
- DE-A1- 10 245 193

## Beschreibung

### Stand der Technik

Die Erfindung geht aus von einem Steller für ein Stellorgan, insbesondere für einen in einem ein gasförmiges Medium führenden Kanal einer Brennkraftmaschine angeordneten Drosselkörper, nach dem Oberbegriff des Anspruchs 1.

Ein bekannter elektrischer Steller für einen Drosselkörper (DE 102 45 193 A1) ist zusammen mit dem Drosselkörper in einer Stelleinheit integriert. Die Stelleinheit weist ein Stellergehäuse auf, das je nach Verwendung in Verbindung mit einer Brennkraftmaschine eines Kraftfahrzeugs als Drosselklappenstutzen oder Abgasrückführventil bezeichnet wird. Durch den Drosselklappenstutzen oder das Abgasrückführventil verläuft ein Kanal, in dem beispielsweise frische Zuluft oder ein Kraftstoff-Luft-Gemisch oder Abgas oder ein Teil des Abgases hin zu einer Brennkraftmaschine oder weg von einer Brennkraftmaschine strömt. Der Steller weist einen elektrischen Stellmotor auf, der über ein zweistufiges Getriebe mit nichtlinearer Ausgangsstufe eine den Drosselkörper tragende Stellwelle antreibt. Die Eingangs-Getriebestufe besteht aus einem auf der Abtriebswelle des Stellmotors drehfest sitzenden Motorritzel und einem mit diesen kämmenden Abtriebsrad, das auf einer im Gehäuse festgelegten Getriebeachse drehbar sitzt. Die Getriebe-Ausgangsstufe besteht aus einem Antriebssegment und einem damit in Eingriff stehenden Abtriebssegment. Das Antriebssegment sitzt auf der Getriebeachse und ist drehstarr, vorzugsweise einstückig, mit dem Abtriebsrad der Eingangs-Getriebestufe verbunden. Das Abtriebssegment sitzt drehfest auf der Stellwelle, die im Stellergehäuse drehgelagert ist. Die beiden Segmente der nichtlinearen Getriebe-Ausgangsstufe stehen über Wälzkurven miteinander in Eingriff, deren Wälzkurvenradien sich über den Drehwinkel stetig ändern. Die Wälzkurvenradien sind dabei so ausgebildet, dass sie sich bei Drehung der beiden Segmente komplementär ändern. Durch die nichtlineare Getriebe-Ausgangsstufe verändert sich über den Verstellweg zwischen dem Stellmotor und dem Drosselkörper die Getriebeübersetzung, was den Vorteil bietet, ein in bestimmten Stellungen des Drosselkörpers erforderliches, höheres Drehmoment von einem relativ leistungsschwachen Stellmotor zur Verfügung zu stellen. Außerdem können in bestimmten Verstellwegbereichen unterschiedliche Stellgeschwindigkeiten am Drosselkörper erzielt werden.

### Vorteile der Erfindung

Der erfindungsgemäße Steller mit den Merkmalen des Anspruchs 1 hat den Vorteil, dass durch die Einfügung der dritten Getriebestufe eine größere Übersetzungsspreizung erzielt wird, die den Einsatz eines sehr kleinen und leistungsschwachen Elektromotors bei einer akzeptablen Stellzeit des Stellers über den gesamten Stellbereich ermöglicht. Die endseitige Gleitlagerung der das Abtriebssegment der Getriebe-Ausgangsstufe tragenden, auf das Stellorgan wirkenden Stellwelle auf der zu ihr koaxial angeordneten ersten Getriebewelle, lässt trotz Dreistufigkeit des Getriebes eine dritte Wellenebene vermeiden und ermöglicht eine kompakte, schmale und niedrige Bauweise des Getriebes und damit des Stellers. Mit dem erfindungsgemäßen Steller ist ein langsames Anfahren des Drosselkörpers an einen Anschlag und das Aufbringen einer erhöhten Haltekraft für einen Dichtsitz des Drosselkörpers am Anschlag möglich. Das erfindungsgemäße Getriebe weist keine Selbsthemmung auf, so dass mittels einer z. B. als Rückholfeder ausgebildeten Rückstelleinrichtung eine einfache Fail-Safe-Funktion realisiert werden kann.

Durch die in den weiteren Ansprüchen aufgeführten Maßnahmen sind vorteilhaften Weiterbildungen und Verbesserungen des im Anspruch 1 angegebenen Stellers möglich.

### Zeichnung

Die Erfindung ist anhand eines in der Zeichnung dargestellten Ausführungsbeispiels in der nachfolgenden Beschreibung näher erläutert. Es zeigen:
- Fig. 1: einen Längsschnitt eines Stellers mit Stellmotor und Getriebe für einen Abgasturbolader,
- Fig. 2: eine schematisierte Draufsicht des Getriebes in Richtung Pfeil II in Fig. 1,
- Fig. 3: ausschnittweise einen Längsschnitt eines Abgasturboladers.

### Beschreibung des Ausführungsbeispiels

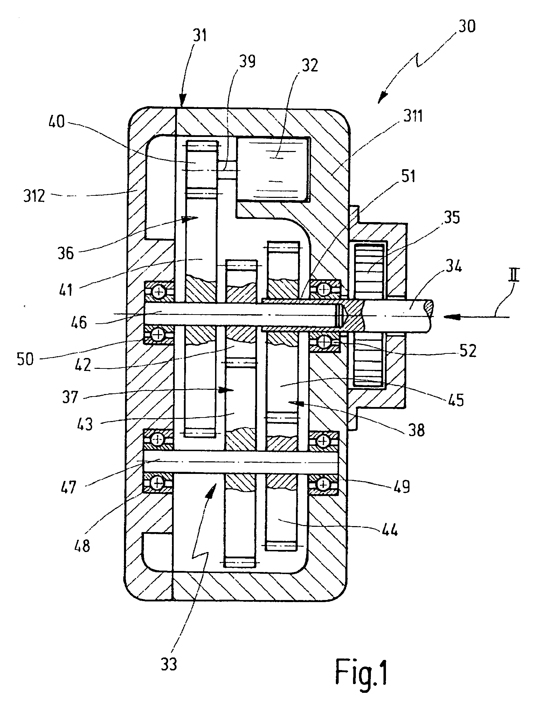

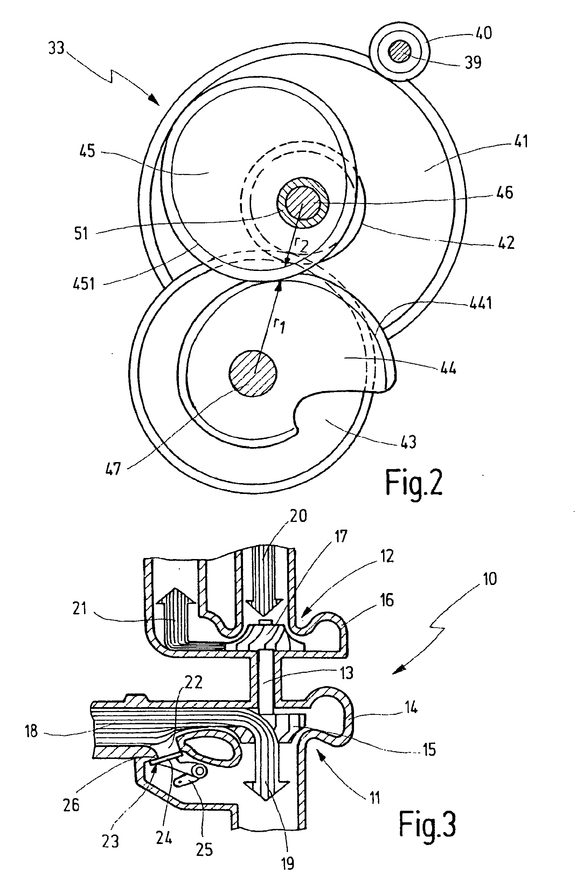

Der in Fig. 1 im Längsschnitt dargestellte elektrische Steller 30 oder Aktuator wird bevorzugt für einen Abgasturbolader 10 verwendet, wie er ausschnittweise in Fig. 3 dargestellt ist. Abgasturbolader sind bekannt und beispielsweise in Bosch "Kraftfahrtechnisches Taschenbuch" ISBN 3-528-23876-3, Seite 532 ff. beschrieben. Der Abgasturbolader 10 besteht aus zwei Strömungsmaschinen, einer Turbine 11 und einem Verdichter 12, die auf einer gemeinsamen Welle 13 angeordnet sind. Die Turbine 11 weist ein in einem Turbinengehäuse 14 angeordnetes Turbinenrad 15 und der Verdichter 12 ein in einem Verdichtergehäuse 16 angeordnetes Verdichterrad 17 auf. Das Turbinenrad 15 wird von dem zuströmenden Abgas 18 angetrieben, und das vom Turbinenrad 15 angetriebene Verdichterrad 17 saugt atmosphärische Frischluft 20 an und bläst vorverdichtete Frischluft 21 in die Brennräume der Brennkraftmaschine ein. Das das Turbinenrad 15 verlassende, abströmende Abgas 19 tritt aus dem Turbinengehäuse 14 aus.

Damit bei Brennkraftmaschinen für Personenkraftwagen wegen der großen Drehzahlspreizung eine sinnvolle Drehmomentenauslegung erreicht werden kann, ist eine Ladedruckregelung vorgesehen, um den maximal zulässigen Ladedruck einzuhalten. Dabei wird der gewünschte Ladedruck durch eine abgasseitige Leistungsregelung der Turbine 11 erzielt. Hierzu ist im Turbinengehäuse 14 ein Bypass 22 vorgesehen, über den ein Teil des zuströmenden Abgases 18 an dem Turbinenrad 15 vorbeigeleitet und direkt mit dem abströmenden Abgas 19 abgeführt wird. Der Bypass 22 wird durch ein Drosselorgan 23 gesteuert, das im Ausführungsbeispiel der Fig. 3 als Bypassklappe 24 ausgebildet ist. Die Bypassklappe 24 wird über einen in Fig. 3 schematisiert dargestellten Hebelmechanismus 25 von dem Steller 30 gemäß Fig. 1 betätigt.

Der Steller 30 weist ein zweiteiliges Stellergehäuse 31 auf, das aus einem topfförmigen Grundkörper 311 und einem den Grundkörper 311 abdeckenden Deckel 312 besteht. Im Stellergehäuse 31 ist ein elektrischer Stellmotor 32 und ein dreistufiges Getriebe 33 angeordnet, über das der Stellmotor 30 eine mit dem Hebelmechanismus 25 gekoppelte Stellwelle 34 verdreht. An der Stellwelle 34 greift eine Rückstelleinrichtung 35 an, gegen deren Kraft die Stellwelle 34 von dem Stellmotor 32 in Richtung des Schließens des Bypasses 22 im Abgasturbolader 10 verstellt wird. Die Rückstelleinrichtung 35, die beispielsweise als Rückholfeder ausgebildet ist, realisiert eine sog. Fail-Safe-Funktion und stellt bei Ausfall des Stellers 30 die Bypassklappe 24 im Turbinengehäuse 14 in eine sog. Notposition, in der der Bypass 22 geöffnet ist, um eine Überdrehzahl der Turbine zu vermeiden.

Das dreistufige Getriebe 33 umfasst eine Getriebe-Eingangsstufe 36, die von dem Stellmotor 32 beaufschlagt ist, eine Getriebe-Zwischenstufe 37 und eine nichtlineare Getriebe-Ausgangsstufe 38, die ihrerseits die Stellwelle 34 beaufschlagt. Die Getriebe-Eingangsstufe 36 besteht aus einem auf der Abtriebswelle 39 des Stellmotors 32 drehfest sitzenden Ritzel 40 und aus einem Abtriebsrad 41, das mit dem Ritzel 40 kämmt. Die Getriebe-Zwischenstufe 37 umfasst ein Antriebsrad 42 und ein Abtriebsrad 43, deren Außenverzahnungen miteinander in Eingriff stehen. Die Getriebe-Ausgangsstufe 38 besteht aus einem Antriebssegment 44 und aus einem Abtriebssegment 45. Antriebsegment 44 und Abtriebsegment 45 wälzen sich mit ihren Außenverzahnungen auf Wälzkurven 441 und 451 (Fig. 2) ab, deren Wälzkurvenradien r₁, r₂ sich über den Drehbereich der Segmente 44, 45 stetig ändern. Dabei sind die Antriebs- und Abtriebssegmente 44, 45 einander so zugeordnet, dass bei ihrer Drehung sich die Wälzkurvenradien r₁, r₂ komplementär ändern. Zur Drehlagerung der An- und Abtriebsräder 42, 41, 43 und von Antriebssegment 44 und Abtriebssegment 45 sind zwei Getriebewellen 46, 47 vorgesehen, die parallel zueinander ausgerichtet und in dem Stellergehäuse 31 drehgelagert sind. Dabei ist die zweite Getriebewelle 47 in zwei als Kugellager ausgebildeten Drehlagern 48, 49 aufgenommen, von denen das Drehlager 48 im Deckel 312 und das Drehlager 49 im Grundkörper 311 festgelegt ist. Die erste Getriebewelle 46 ist einerseits in einem als Kugellager ausgebildeten Drehlager 50, das im Deckel 312 des Stellergehäuses 31 festgelegt ist, und andererseits in einem als Hohlwelle 51 ausgebildeten Endabschnitt der Stellwelle 34 gleitgelagert, wobei die Stellwelle 34 im Bereich ihres die Hohlwelle 51 bildenden Endabschnitts in einem als Kugellager ausgebildeten Drehlager 52 aufgenommen ist, das im Grundkörper 311 des Stellergehäuses 31 festgelegt ist.

In dem Ausführungsbeispiel der Fig. 1 ist das dreistufige Getriebe 33 durch die Bemessung der Verzahnungen der einzelnen Getriebestufe 36 - 38 so ausgelegt, dass eine Übersetzung von ca. i=50 erreicht ist. Dreht der Stellmotor 32 über das Ritzel 40 das Abtriebsrad 41 der Getriebe-Eingangsstufe 36 um einen bestimmten Drehwinkel, so wird über die erste Getriebewelle 46 das Antriebsrad 42 der Getriebe-Zwischenstufe 37 um den gleichen Drehwinkel gedreht. Entsprechend dem Übersetzungsverhältnis der Getriebe-Zwischenstufe 37 wird das Abtriebsrad 43 der Getriebe-Zwischenstufe 37 um einen Drehwinkel gedreht und über die zweite Getriebewelle 47 das Antriebssegment 44 der Getriebe-Ausgangsstufe 38 um den gleichen Drehwinkel. Das Antriebssegment 44 treibt mit den vorgegebenen Übersetzungsverhältnis das Abtriebssegment 45 der Getriebe-Ausgangsstufe 38 an, und dieses dreht die Stellwelle 34 um den entsprechenden Drehwinkel. Die drehende Stellwelle 34 verschiebt über den Hebelmechanismus 25 die Bypassklappe 24 in Richtung Schließen der Bypassöffnung des Bypasses 22.

In Fig. 3 ist die Bypassklappe 24 in einer Position dargestellt, in welcher der Bypass 22 vollständig geschlossen ist und die Bypassklappe 24 an einem Anschlag 26 anliegt. Diese Position der Bypassklappe 24 wird nach einem maximalen Verstellweg der Stellwelle 34 erreicht. Durch die Auslegung der nichtlinearen Getriebe-Ausgangsstufe 38 wird von dem Stellmotor 32 auf die Bypassklappe 24 ein ausreichend hohes Drehmoment aufgebracht, um die Bypassklappe 24 mit Dichtsitz gegen den Druck des zuströmenden Abgases 18 am Anschlag 26 anzupressen. Bei Wegfall des Drehmoments stellt die an der Stellwelle 34 angreifende Rückstelleinrichtung 35 die Bypassklappe 24 in eine Position zurück, in der der Bypass 22 geöffnet ist.

Der beschriebene Steller 30 kann auch als Aktuator in einem Drosselklappenstutzen oder einem Abgasrückführventil dienen. Mit dem Drosselklappenstutzen wird zu den Brennräumen der Brennkraftmaschine strömende Frischluft oder ein den Brennräumen zugeführtes Kraftstoff-Luft-Gemisch gesteuert. Mit dem Abgasrückführventil wird der Anteil der der Frischluft zugesetzten Abgasmenge gesteuert.

## Patentansprüche

1. Steller für ein Stellorgan, insbesondere für einen in einem ein gasförmiges Medium führenden Kanal einer Brennkraftmaschine angeordneten Drosselkörper (23), mit einem elektrischen Stellmotor (32), mit einer das Stellorgan verstellenden Stellwelle (34) und mit einem zwischen Stellmotor (32) und Stellwelle (34) angeordneten, mehrstufigen Getriebe (33), das eine Getriebe-Eingangsstufe (36), bestehend aus einem vom Stellmotor (32) antreibbaren Ritzel (40) und einem mit diesem kämmenden Abtriebsrad (41), und eine nichtlineare Getriebe-Ausgangsstufe (38), bestehend aus einem Antriebssegment (44) und einem mit diesem in Zahneingriff stehenden, drehfest auf der Stellwelle (34) sitzenden Abtriebssegment (45), aufweist, **dadurch gekennzeichnet, dass** zwischen Getriebe-Eingangsstufe (36) und Getriebe-Ausgangsstufe (38) eine GetriebeZwischenstufe (37), bestehend aus einem Antriebsrad (42) und einem mit diesem kämmenden Abtriebsrad (43), angeordnet ist, dass das Abtriebsrad (41) der Getriebe-Eingangsstufe (36) und das Antriebsrad (42) der Getriebe-Zwischenstufe (37) auf einer ersten Getriebewelle (46) drehfest angeordnet sind, dass das Abtriebsrad (43) der Getriebe-Zwischenstufe (37) und das Antriebssegment (44) der Getriebe-Ausgangsstufe (38) drehfest auf einer zweiten Getriebewelle (47) angeordnet sind, die parallel zur ersten Getriebewelle (46) ausgerichtet ist, und dass die Stellwelle (34) zumindest endseitig als Hohlwelle (51) ausgebildet ist, die auf der ersten Getriebewelle (46) gleitgelagert ist.

2. Steller nach Anspruch 1, **dadurch gekennzeichnet, dass** die Stellwelle (34) mit einem endseitigen, hohlen Wellenabschnitt auf einen Wellenabschnitt der ersten Getriebewelle (46) mit Drehspiel aufgeschoben ist und dass die Stellwelle (34), vorzugsweise im Bereich ihres hohlen Wellenabschnitts, einerseits und die erste Getriebewelle (46) andererseits in je einem Drehlager (52, 50), vorzugsweise Kugellager, aufgenommen sind.

3. Steller nach Anspruch 1 oder 2, **dadurch gekennzeichnet, dass** das Antriebssegment (44) und das Abtriebssegment (45) der Getriebe-Ausgangsstufe (38) sich über den Drehbereich der Segmente zueinander komplementär ändernde Wälzkurvenradien aufweisen.

4. Steller nach Anspruch 2 oder 3, **dadurch gekennzeichnet, dass** Stellmotor (32) und Getriebe (33) in einem Stellergehäuse (31) aufgenommen sind, in dem die Drehlager (52, 50), vorzugsweise Kugellager, von Stellwelle (34) und erster Getriebewelle (46) sowie zwei die zweite Getriebewelle (47) aufnehmende Drehlager (48, 49), vorzugsweise Kugellager, festgelegt sind.

5. Steller nach einem der Ansprüche 1 - 4, **dadurch gekennzeichnet, dass** an der Stellwelle (34) eine Rückstelleinrichtung (35) zum Rückdrehen der Stellwelle (34) bei inaktivem Stellmotor (32) angreift.

6. Steller nach einem der Ansprüche 1 - 5, **gekennzeichnet durch** seine Verwendung in einem Abgasturbolader (10) einer Brennkraftmaschine für Kraftfahrzeuge zur Leistungsregelung einer vom Abgas der Brennkraftmaschine angetriebenen Turbine (11).

7. Steller nach Anspruch 6, **dadurch gekennzeichnet, dass** die Stellwelle (34) über einen Hebelmechanismus (25) mit einer Bypassklappe (24) gekoppelt ist, die in einem Turbinengehäuse (14) der Turbine (11) einen um ein Turbinenrad (15) herumführenden Bypass (22) steuert.

## Claims

1. Actuator for an actuating member, in particular for a throttle body (23) which is arranged in a duct of an internal combustion engine, which duct routes a gaseous medium, having an electric actuating motor (32), having an actuating shaft (34) which actuates the actuating member, and having a multiple-stage transmission (33) which is arranged between the actuating motor (32) and the actuating shaft (34) and has a transmission input stage (36), consisting of a pinion (40) which can be driven by the actuating motor (32) and of an output gear (41) which meshes with said pinion, and a non-linear transmission output stage (38), consisting of a drive segment (44) and an output segment (45) which is in toothing engagement with it and is seated fixedly on the actuating shaft (34) so as to rotate with it, **characterized in that** a transmission intermediate stage (37), consisting of a drive gear (42) and an output gear (43) which meshes with it, is arranged between the transmission input stage (36) and the transmission output stage (38), **in that** the output gear (41) of the transmission input stage (36) and the drive gear (42) of the transmission intermediate stage (37) are arranged fixedly on a first transmission shaft (46) so as to rotate with it, **in that** the output gear (43) of the transmission intermediate stage (37) and the drive segment (44) of the transmission output stage (38) are arranged fixedly on a second transmission shaft (47) so as to rotate with it, which second transmission shaft (47) is oriented parallel to the first transmission shaft (46), and **in that** the actuating shaft (34) is configured at least on the end side as a hollow shaft (51) which is mounted slidingly on the first transmission shaft (46).

2. Actuator according to Claim 1, **characterized in that** the actuating shaft (34) is pushed with an endside, hollow shaft section onto a shaft section of the first transmission shaft (46) with rotational play, and **in that** firstly the actuating shaft (34) is received, preferably in the region of its hollow shaft section, and secondly the first transmission shaft (46) is received in in each case one rotary bearing (52, 50), preferably ball bearings.

3. Actuator according to Claim 1 or 2, **characterized in that** the drive segment (44) and the output segment (45) of the transmission output stage (38) have rolling curve radii which change over the rotational range of the segments in a complementary manner with respect to one another.

4. Actuator according to Claim 2 or 3, **characterized in that** the actuating motor (32) and the transmission (33) are accommodated in an actuator housing (31), in which the rotary bearings (52, 50), preferably ball bearings, of the actuating shaft (34) and the first transmission shaft (46) and two rotary bearings (48, 49), preferably ball bearings, which receive the second transmission shaft (47) are fixed.

5. Actuator according to one of Claims 1 to 4, **characterized in that** a restoring device (35) acts on the actuating shaft (34) in order to turn back the actuating shaft (34) when the actuating motor (32) is inactive.

6. Actuator according to one of Claims 1 to 5, **characterized by** the use thereof in an exhaust-gas turbocharger (10) of an internal combustion engine for motor vehicles in order to control the power output of a turbine (11) which is driven by the exhaust gas of the internal combustion engine.

7. Actuator according to Claim 6, **characterized in that** the actuating shaft (34) is coupled via a lever mechanism (25) to a bypass flap (24) which, in a turbine housing (14) of the turbine (11), controls a bypass (22) which leads around a turbine wheel (15).

## Revendications

1. Dispositif de commande d'un actionneur, en particulier pour un corps d'étranglement (23) disposé dans un canal d'un moteur à combustion interne conduisant un milieu gazeux, comprenant un servomoteur électrique (32), un arbre de commande (34) réglant l'actionneur et une transmission à rapports multiples (33) disposée entre le servomoteur (32) et l'arbre de commande (34), qui présente un rapport d'entrée de transmission (36) constitué d'un pignon (40) pouvant être entraîné par le servomoteur (32) et une roue de sortie (41) s'engrenant avec celui-ci, et un rapport de sortie de transmission non linéaire (38) constitué d'un segment d'entraînement (44) et d'un segment de sortie (45) en prise par engrènement avec celui-ci, reposant de manière solidaire en rotation sur l'arbre de commande (34), **caractérisé en ce qu'**entre le rapport d'entrée de transmission (36) et le rapport de sortie de transmission (38) est disposé un rapport intermédiaire de transmission (37), constitué d'une roue d'entraînement (42) et d'une roue de sortie (43) s'engrenant avec celle-ci, **en ce que** la roue de sortie (41) du rapport d'entrée de transmission (36) et la roue d'entraînement (42) du rapport intermédiaire de transmission (37) sont disposées de manière solidaire en rotation sur un premier arbre de transmission (46), **en ce que** la roue de sortie (43) du rapport intermédiaire de transmission (37) et le segment d'entraînement (44) du rapport de sortie de transmission (38) sont disposés de manière solidaire en rotation sur un deuxième arbre de transmission (47), qui est orienté parallèlement au premier arbre de transmission (46), et **en ce que** l'arbre de commande (34) est réalisé au moins du côté de son extrémité sous forme d'arbre creux (51) qui est monté à coulissement sur le premier arbre de transmission (46).

2. Dispositif de commande selon la revendication 1, **caractérisé en ce que** l'arbre de commande (34) est enfilé avec un jeu de rotation, par une portion d'arbre creuse du côté de l'extrémité, sur une portion d'arbre du premier arbre de transmission (46), et **en ce que** l'arbre de commande (34), de préférence dans la région de sa portion d'arbre creuse, est reçu d'une part dans un palier pivotant (52) respectif, et le premier arbre de transmission (46) est reçu d'autre part dans un palier pivotant respectif (50), les paliers pivotants étant de préférence des roulements à billes.

3. Dispositif de commande selon la revendication 1 ou 2, **caractérisé en ce que** le segment d'entraînement (44) et le segment de sortie (45) du rapport de sortie de transmission (38) présentent des rayons de courbure de roulement variant de manière complémentaire l'un à l'autre sur la plage de rotation des segments.

4. Dispositif de commande selon la revendication 2 ou 3, **caractérisé en ce que** le servomoteur (32) et la transmission (33) sont reçus dans un boîtier de dispositif de commande (31) dans lequel les paliers pivotants (52, 50), de préférence des roulements à billes, sont fixés par l'arbre de commande (34) et le premier arbre de transmission (46) ainsi que deux paliers pivotants (48, 49), de préférence des roulements à billes, recevant le deuxième arbre de transmission (47).

5. Dispositif de commande selon l'une quelconque des revendications 1 à 4, **caractérisé en ce qu'**un dispositif de rappel (35) vient en prise sur l'arbre de commande (34) pour tourner en arrière l'arbre de commande (34) lorsque le servomoteur (32) est inactif.

6. Dispositif de commande selon l'une quelconque des revendications 1 à 5, **caractérisé par** son utilisation dans un turbocompresseur à gaz d'échappement (10) d'un moteur à combustion interne pour véhicules automobiles pour la régulation de puissance d'une turbine (11) entraînée par les gaz d'échappement du moteur à combustion interne.

7. Dispositif de commande selon la revendication 6, **caractérisé en ce que** l'arbre de commande (34) est accouplé par le biais d'un mécanisme de levier (25) à un clapet de dérivation (24) qui, dans un carter de turbine (14) de la turbine (11), commande une dérivation (22) contournant une roue de turbine (15).
